# EUROPEAN PATENT APPLICATION

(11) **EP 4 443 949 A1**
(43) Date of publication of application: **09.10.2024**
(21) Application number: 22901749.6
(22) Date of filing: 30.11.2022
(51) Int. Cl.: H04W 24/10, H04W 76/25, H04W 76/30, H04W 12/06, H04W 60/00, H04W 84/06

(54) **METHOD FOR MEASURING TRAFFIC USAGE**

(30) Priority: 01.12.2021 KR 20210170222; 07.01.2022 KR 20220002949
(71) Applicant: LG Electronics Inc., Yeongdeungpo-gu Seoul 07336 (KR)
(72) Inventor: KIM, Jaewoo, Seoul 06772 (KR); KIM, Laeyoung, Seoul 06772 (KR); YOUN, Myungjune, Seoul 06772 (KR)
(74) Representative: Frenkel, Matthias Alexander
(86) International application number: PCT/KR2022/019162
(87) International publication number: WO 2023/101391

(57) **Abstract**

One disclosure of the present disclosure provides a method by which SMF performs communication. The method comprises the steps of: receiving, from a user equipment (UE), a protocol data unit (PDU) session establishment request message for a PDU session; transmitting, to the UE, a PDU session establishment acknowledgment message for the PDU session, wherein the PDU session is for an uncrewed aerial system (UAS) service; determining whether to maintain network resources for the UAS service, on the basis of the UAS service being unavailable; transmitting an N4 session modification request message that indicates a use report to a user plane function (UPF), on the basis of the determination to maintain the network resources for the UAS service; and receiving a usage report from the UPF, on the basis of the N4 modification request message.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DESCLOSURE

### TECHNICAL PROBLEM

It is necessary to measure the usage of network resources during the period from the time the UAS service is disallowed until the PDU session is released.

### TECHNICAL SOLUTION

In the above-described situation, the SMF instructs the UPF to report usage.

### ADVANTAGEOUS EFFECTS

The present specification may have various effects.

For example, information about network resource usage during the time from when 3GPP disallows UAS services until the PDU session is released may be provided.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 and FIG. 6 show an example of a 5G system architecture to which the implementation of the present specification is applied.
FIGS. 7 and 8 show an example of a PDU session establishment procedure to which implementations of the present disclosure is applied.
FIG. 9 shows the logical structure of 5GS and EPS for UAVs.
FIG. 10 shows the procedure for releasing a PDU session when a change in subscription data in a 3GPP network makes it impossible to allow UAS services.
FIG. 11 shows the procedure for maintaining the PDU session until the UUAA revocation process is initiated from the USS when the UAS service becomes unacceptable due to subscription data changes in the 3GPP network.
FIG. 12a and FIG. 12b are illustrative drawings in accordance with the disclosure of the present specification.
FIG. 13 shows the procedure of the SMF according to disclosure of the present specification.
FIG. 14 shows the procedure of the UE according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

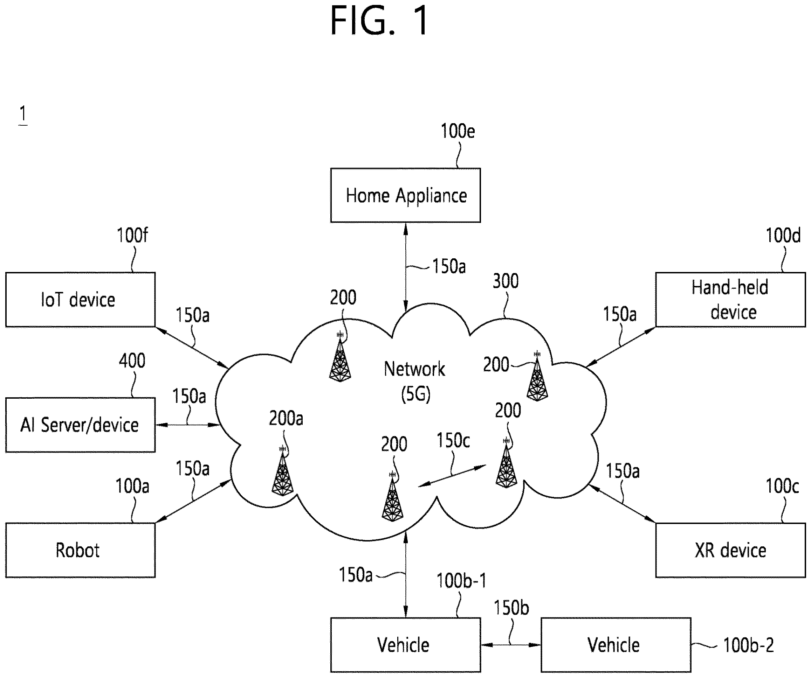

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - | 60, 120, 240kHz |
| | 52600MHz | |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

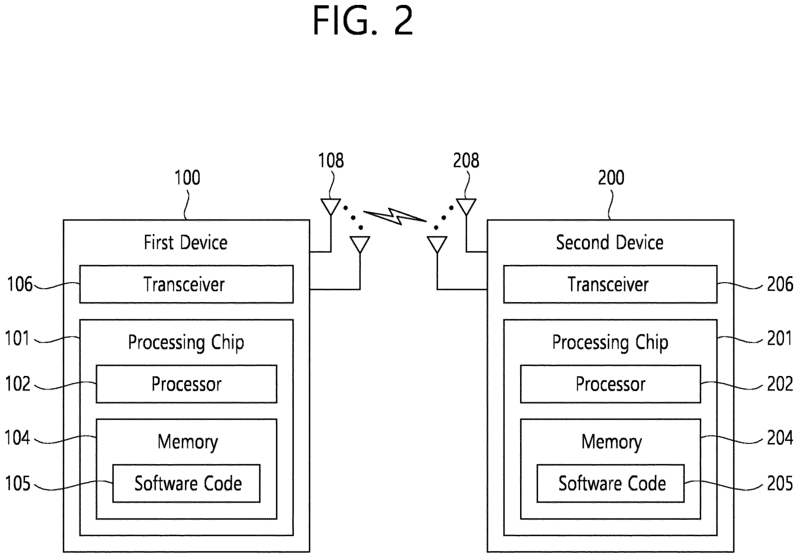

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

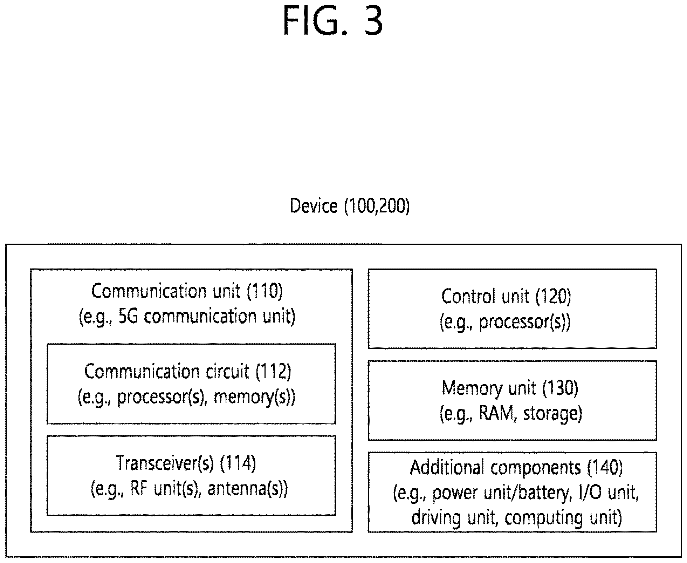

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

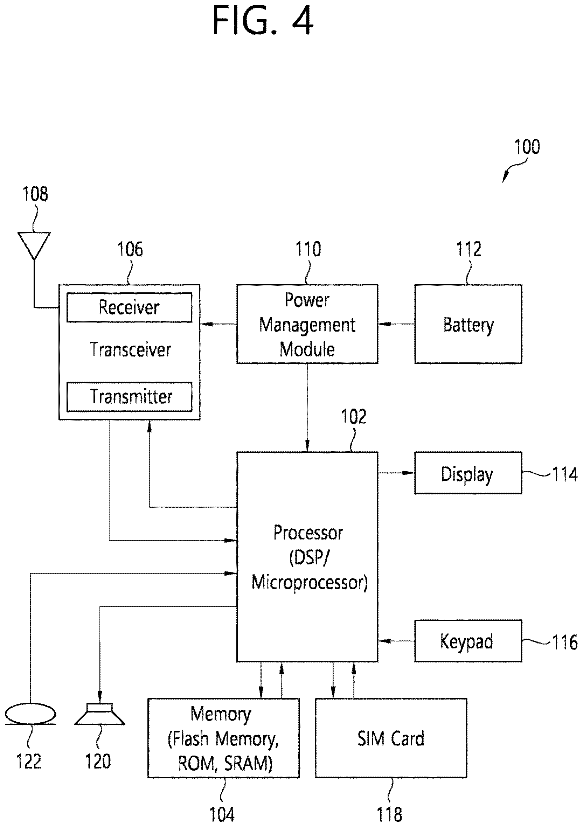

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

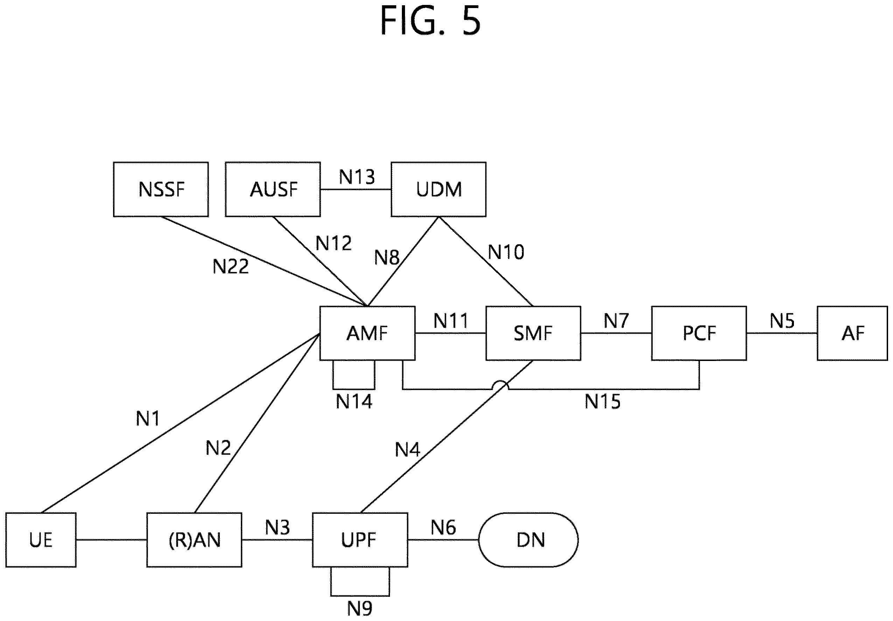

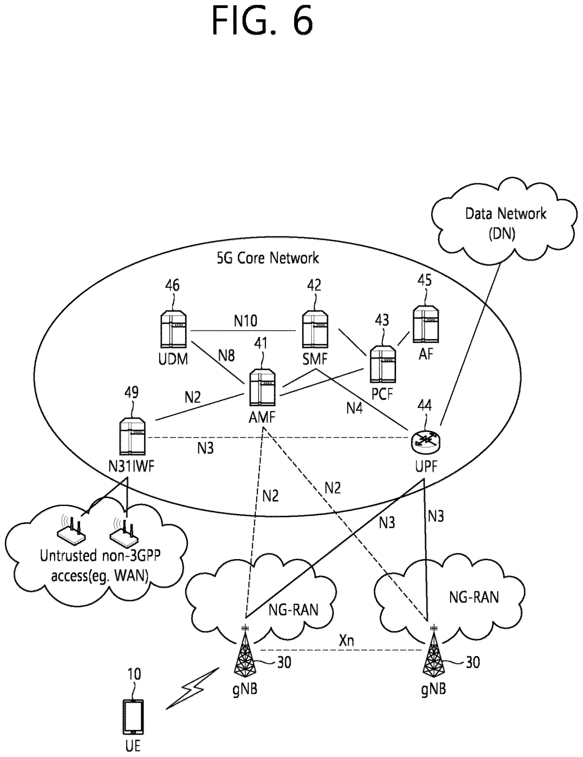

**FIG. 5** **and** **FIG. 6** **show an example of a 5G system architecture to which the implementation of the present specification is applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

5GC (5G Core) may include various components, and in FIG. 6, AMF (Access and Mobility Management Function) 410, SMF (Session Management Function) 420, and PCF (Policy Control) corresponding to some of them Function) 430, UPF (User Plane Function) 440, AF (Application Function) 450, UDM (Unified Data Management) 460, and N3IWF (Non-3GPP InterWorking Function) 490.

The UE 100 is connected to a data network via the UPF 440 through a Next Generation Radio Access Network (NG-RAN) including the gNB 20.

The UE 100 may receive a data service through untrusted non-3rd Generation Partnership Project (non-3GPP) access, for example, a wireless local area network (WLAN). To connect the non-3GPP access to the core network, an N3IWF 490 may be deployed.

### <PDU session establishment procedure>

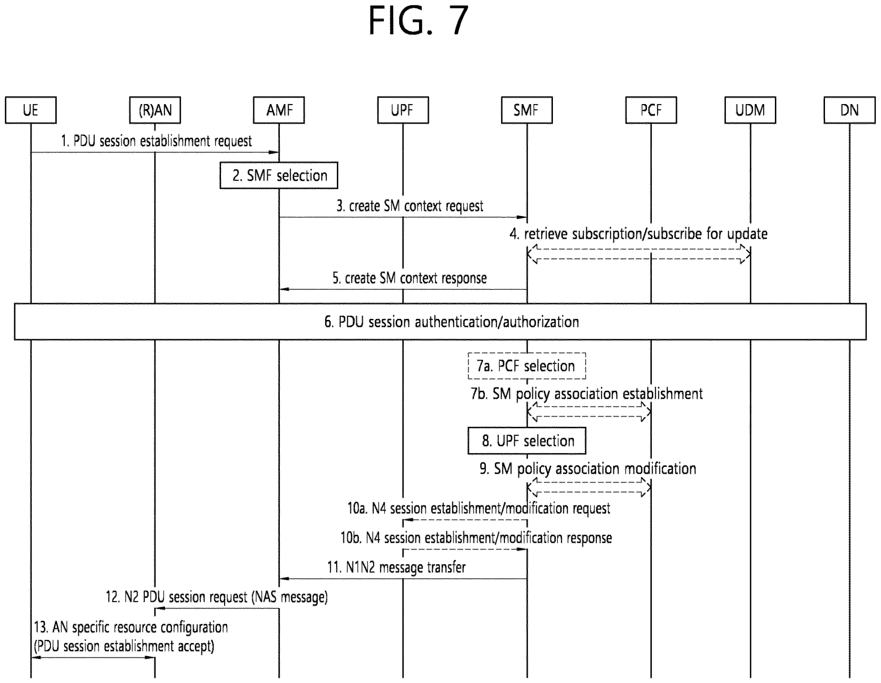

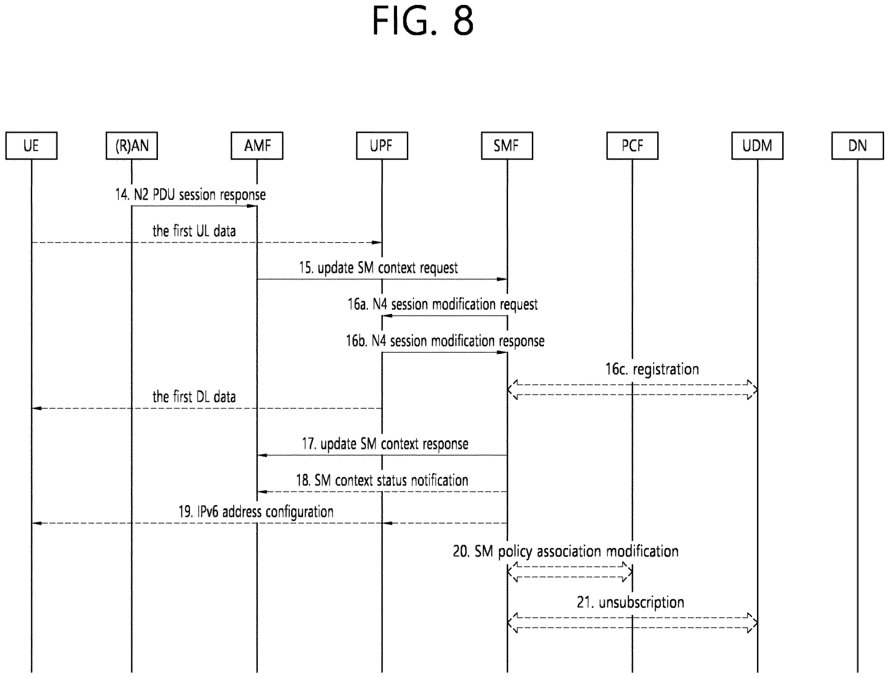

**FIGS. 7** **and** **8** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 7 and 8 specify the procedures for establishing PDU sessions associated with a single access type at a given time.

The procedure shown in FIGS. 7 and 8 assumes that the UE has already registered on the AMF thus unless the UE is emergency registered the AMF has already retrieved the user subscription data from the UDM.

First, procedures of FIG. 7 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 8, which follow the procedures of FIG. 7, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### <UAS (Uncrewed Aerial System)>

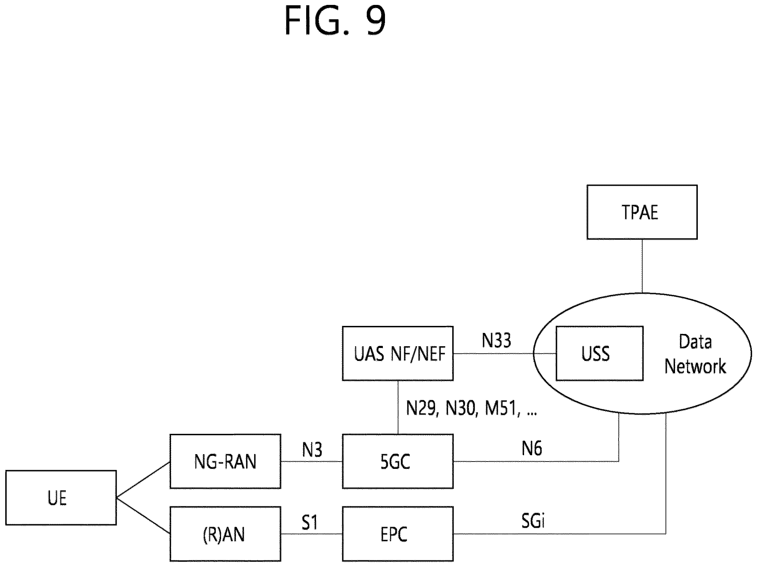

3GPP is working on support for Uncrewed Aerial System (UAS) in Release 17. A UAS consists of one or more unmanned aerial vehicles, UAV (Uncrewed Aerial Vehicle), and one unmanned aerial controller, UAV-C (UAV Controller), which are controlled by the UAV Controller over a C2 (Command and Control) link in a 3GPP mobile network or a non-3GPP mobile network. For the management of the UAS, application data traffic is exchanged between the UAS Service Supplier (USS)/UAS Traffic Management (UTM) and the UAV over the 3GPP mobile network. The UAV may be considered as a UE, and FIG. 9 shows the logical 5GS and EPS architecture for UAVs.

**FIG. 9** **shows the logical structure of 5GS and EPS for UAVs.**

In order to receive connectivity services from the network, the UAV must perform an authentication procedure through the UAV USS authentication and authorization procedure (UUAA), and depending on the network operator's policy, authentication may be performed in the following ways
1) UUAA is performed during the UAV's registration to the network: This is done if the UAV has an Aerial UE subscription in its Access and Mobility Subscription data and provides the CAA-Level UAV ID in the registration request message (this is referred to as UUAA-MM). If UUAA-MM is not performed, UAV is performed during PDU session creation.
2) Performed during the PDU session creation process of DNN for UAV service (PDN connection in case of EPS) (let's call it UUAA-SM): UUAA-SM is initiated by the SMF (SMF+PGW-C in case of EPS) when the UAV provides the CAA-Level UAV ID in the PDU session creation request message in case of 5GS, or in the ESM message container in case of EPS.

The communication of the UAV is divided into USS communication and C2 communication between the UAV and USS. USS communication is user plane data transmission except C2 communication. The PDU Session/PDN connection for C2 communication and the PDU Session/PDN connection for USS communication can be used in common or separately, i.e., the PDU Session/PDN connection for C2 communication and the PDU Session/PDN connection for USS communication can be the same or different.

UAS Network Function is supported by Network Exposure Function (NEF) or Service Capability Exposure Function (SCEF)+NEF and is used for external exposure of services to USS. UAS-NF leverages the existing exposure services of NEF/SCEF for operations such as authentication/authorization of UAVs, flight permission, revocation of UAV-UAVC pairing permission and related operations, location reporting, and control of QoS/traffic filtering for C2 communication. The UAS NF stores the result of the UUAA-MM process and the result of the UUAA-SM process, and in order to support re-authentication upon request of the USS, the UAS NF shall store the address of the AMF or SMF/SMF+PGW-C currently providing the service, along with whether the re-authentication should be requested to the AMF or SMF/SMF+PGW-C.

The USS may initiate the Re-authentication process through the UAS NF at any time after the end of the UUAA process. The UUAA re-authentication is performed via SMF (UUAA-SM) or AMF (UUAA-MM) depending on the network settings, and the result of the re-authentication is delivered from the USS to the UE via SMF (UUAA-SM) or AMF (UUAA-MM) through the UAS NF. To avoid this problem, the USS may provide an indication in the re-authentication result/response that "the network resources related to the UAS service may be released in case of UUAA failure", since immediately releasing all PDU sessions in case of a failed re-authentication result would result in the loss of command and control and location tracking of the UAV. AMFs that receive such an indication may release PDU Sessions related to the UAS service and perform a network initiated de-registration procedure. An SMF that receives such an indication may release the resources associated with the UAS service (release PDU sessions) if the UUAA fails.

If the UUAA fails and no such indication is received, the AMF or SMF may retain the resources associated with the UAS service and use the PDU session to communicate and C2 with the USS. The USS can later release the UAS-related resources through the UUAA revocation process.

### < Usage Report>

According to the conventional 5GS technology, the Usage Report in the UPF is passed from the UPF to the SMF by the N4 interface interaction between the SMF and the UPF.

An N4 Session context, identified by an N4 Session ID, is created by the SMF and UPF respectively to store parameters related to the N4 Session, including the N4 Session ID used for the N4 session, any Packet Detection Rules (PDRs), Usage Reporting Rules (URRs), QoS Enforcement Rules (QERs), and Forwarding Action Rules (FARs) or Multi-Access Rules (MARs).

PDRs have the necessary information to distinguish packets arriving at the UPF, and each and every PDR is used to detect packets for a specific transmission direction (uplink downlink), while URRs define how packets are measured and when and how to forward the measurement reports.

UPF sends usage reports to inform the SMF about the measurement of an enabled URR or the detection of application traffic by an enabled PDR. Usage reports for each URR can also be generated repeatedly if the trigger event is valid. A Final Usage Report is sent for a URR when the URR is no longer active, either because the URR is removed or because all references to this URR are removed from PDRs belonging to the N4 session. If the N4 session is removed due to PDU session release, the Usage Report is also included in the N4 Session Release response message and sent. In this case, the Termination Report (TERMR) field in the Usage Report Trigger field is set to 1, indicating that the Usage Report is due to the termination of the N4 session.

The Information Elements (IEs) of the PDR that are updated over the N4 session from SMF to UPF are described below. The PDR contains Packet Detection Information (PDI) to detect the required packets and URR ID List (URR) to receive usage information for the packets filtered by the PDI. The URR includes a usage measurement method and a reporting trigger, and multiple URRs can be included within the same PDR.

The PDR in a PFCP session establishment request can include a PDI and a URR ID.

The PDI MUST contain the PDI against which the incoming packet will be matched.

The URR ID is present if the measurement behavior is applied to packets that match the PDR. If present, this IE MUST contain the URR ID to be associated with the PDR. Multiple IEs within the same IE type may exist to represent a list of URRs to be associated with a PDR.

A URR includes a measurement method and reporting triggers.

The measurement method IE indicates how network resource usage should be measured, i.e., whether data volume, duration (i.e., time), combined volume/duration, or events should be measured.

reporting triggers IE should indicate the trigger(s) for reporting network resource usage to the CP function. For example, periodic reporting or reporting when a threshold is reached, envelope closure, or when the SMF instructs the UPF to report the receipt of an End Marker packet from a previous I-UPF during the service request procedure.

Depending on the Measurement method in the URR IE, usage can be measured by one or more of the following methods: duration, Volume, or Event, and the Reporting Trigger in the URR can specify the conditions under which the measured usage report is forwarded from the UPF to the SMF.

Based on the PDR and URR set by the SMF, the UPF delivers a usage report, Usage Report IE, as shown below. UPF delivers a usage report for one or more of duration, volume, or event depending on the measurement method of the URR, and the condition that triggers the usage report is indicated in the Usage Report Trigger field.

Depending on the measurement method, SMFs can use reporting triggers as follows.

For volume-based measurement methods
- The SMF can request that the Volume Threshold IE send a usage report when a certain amount of traffic is reached.
- If the Volume Quota IE is set, the SMF requests that UPF stop forwarding packets when the measured traffic reaches the set usage limit, and also requests that UPF send usage reports.

For time-based measurement method
- SMFs can use Time Threshold IE to request that usage reports be sent after a certain amount of time has passed.
- The SMF uses Time Quota to request that the UPF stop forwarding packets when the set time limit is reached, and also allows the UPF to send usage reports.

After the UPF generates a usage report for forwarding to the SMF,
- Resets the count currently being measured for that URR (UPF sends a usage report for the usage since the last usage report for the URR).
- Reapply all Volume/Time/Event Thresholds for that URR if the threshold was reached and a usage report was sent.
- Continue to measure usage with existing parameters until further instruction from SMF.
- If you receive a new threshold or quota from the SMF for a URR that is already being measured, apply the measurements count for the URR being measured against the new threshold or quota.

For example, if the measurement method of a URR is set to volume and the Reporting trigger is set to Volume threshold = 10 Mbytes and Volume quota = 100 Mbytes, UPF measures the packet usage of the UE and sends a usage report to the SMF when 10 Mbytes is consumed. After sending the usage report, UPF resets the measurement and adjusts the remaining quota to 90 Mbytes. For each additional 10 Mbytes of usage, UPF will forward a usage report to the SMF. When the quota is reached with a total of 100 Mbytes of usage, it stops forwarding packets and sends 10 Mbytes of usage reports to the SMF.

In the above example, if a new volume quota is allocated before the 100 Mbytes total quota is exhausted, for example, after sending a total of 90 Mbytes of usage reports and only 10 Mbytes of the limit remains, the SMF updates its URR to set the volume quota to 100 Mbytes, which will allow it to forward packets up to 190 Mbytes.

By setting the Monitoring Time IE on a URR for all measurement methods, you can request network resource usage reports before and after a specific time. UPF sends two usage reports for one URR ID. Each usage report indicates whether it is before (BEF) or after (ATF) the Monitoring Time via the Usage Information field.

Upon termination of an N4 Session, UPF sends a Usage Report in the N4 Session Deletion Response to each URR associated with that N4 Session for the usage since the last Usage Report.

The SMF may create/update/delete URRs during the N4 session creation or N4 session modification process with UPF.

In the operation of N4 Session Modification Procedure, the IEs included in N4 Session Modification may include Update PDR, Create PDR, Update URR, Create URR, etc.

In the behavior of the N4 Session Release Procedure, the IEs included in the N4 Session Release Response include Usage Report.

In the behavior of the N4 Session Level Reporting Procedure, the IEs included in the N4 Session Report message may include Usage Reports.

### < Problems to be solved in the disclosure of the present specification >

The following subscription data is relevant for UAS services. For more information, UE Subscription data types may be referred.

"AerialUESubscriptionInfo" in the Access and Mobility (AM) Subscription data, which is used for network registration and mobility management of the terminal, indicates whether aerial services are allowed for the UE.

"DNN(s) subject to aerial services" in the SMF Selection Subscription data used by AMF for SMF selection indicates the list of DNNs used for aerial services.

For each DNN within each S-NSSAI in the Session Management (SM) Subscription data used for PDU Session Establishment of the terminal, "Aerial service indication" indicates whether the DNN is used for aerial services, and "API based secondary authentication indication" indicates whether the DNN requires API-based secondary authentication/authorization for PDU Session Establishment.

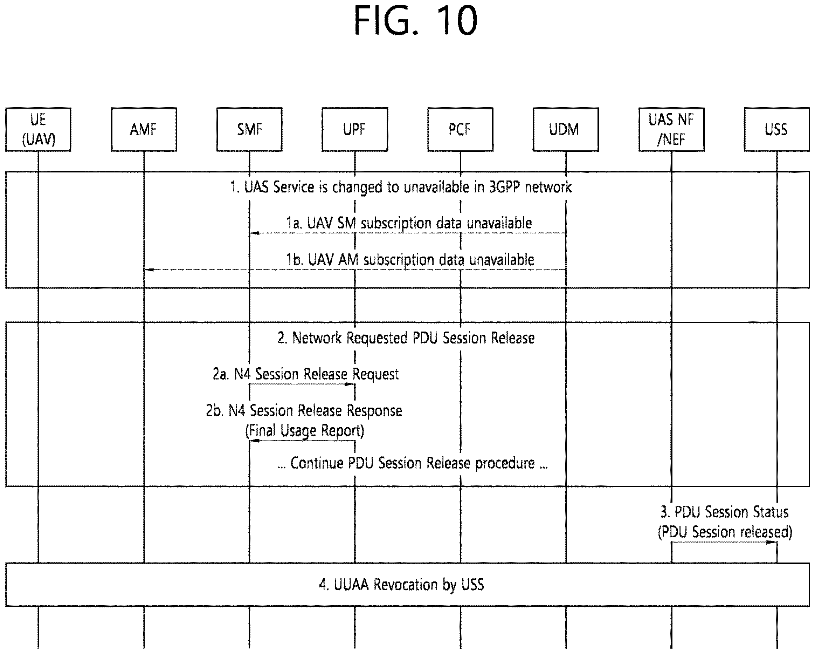

During normal UAS service provision, there may be cases where UAS services are not allowed due to changes in policy or subscription information of UAS terminals within 3GPP. For example, a change in the aerial subscription information managed by 3GPP may change the aerial subscription information to not allow aerial services, or a change in the aerial service indication in the SM Subscription data may change the PDU session being used for UAS services to no longer support UAS services. In this case, the 3GPP network may need to disconnect the UAV or block data transmission and reception of the PDU session for UAS services. Similarly, changes to the subscription data in the 3GPP network may make it impossible to allow UAS services. In such cases, the procedure for releasing the PDU session is shown in FIG. 10.

**FIG. 10** **shows the procedure for releasing a PDU session when a change in subscription data in a 3GPP network makes it impossible to allow UAS services.**

If a change in the aerial subscription data of the UDM in the 3GPP network causes the UAS service to be disallowed, the AMF will be notified for AM subscription data and the SMF will be notified for SM subscription data. The AMF or SMF may then initiate a Network Requested PDU Session Release procedure to disconnect the PDU session. When the PDU session is disconnected, the UAS NF/NEF forwards a PDU session disconnection notification message to the USS so that the USS is aware that the PDU session has been disconnected. The USS may perform the UUAA revocation procedure as required.

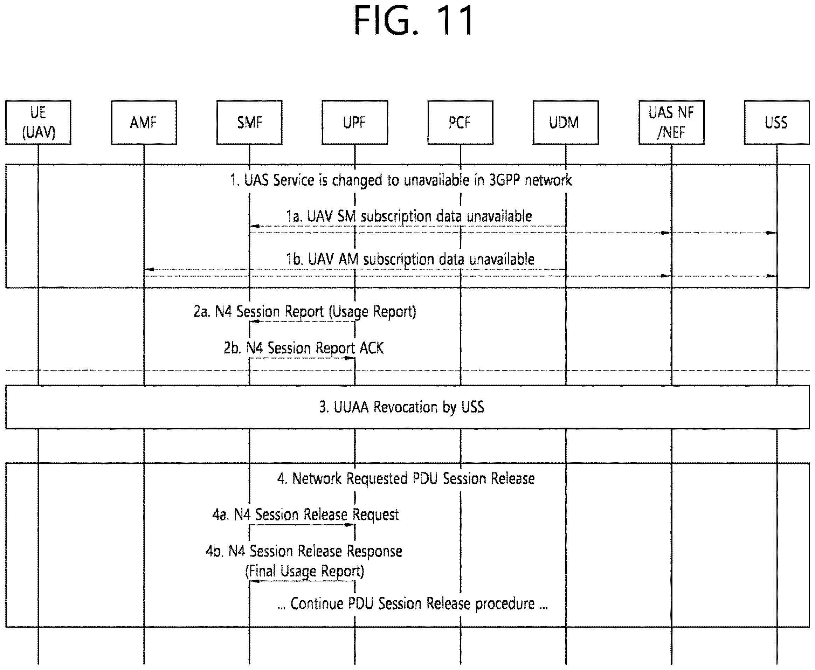

In this case, the USS and UAV-C will lose command and control and tracking of the UAV at an unexpected time. Especially if the UAVs are used for critical missions, such as Critical Mission or Public Safety, there is a need to continue providing services to fulfill the mission. Therefore, it is possible to consider a scenario where the PDU session in the 3GPP network is maintained for a period of time, so that the USS can release the UAS-related resources through the UUAA revocation process with the UAV after receiving temporary instructions from the USS (such as moving to a safe location) or after the critical mission is completed. In this case, the PDU session may be maintained until the USS is informed that the service has become unacceptable due to a change in aerial subscription data and a UUAA revocation process is initiated by the USS. The procedure in this case is shown in FIG. 11.

**FIG. 11** **shows the procedure for maintaining the PDU session until the UUAA revocation process is initiated from the USS when the UAS service becomes unacceptable due to subscription data changes in the 3GPP network.**

The PDU session is maintained until the USS requests to revoke the UUAA. Therefore, the resources of the PDU session may be utilized. That is, DL/UL traffic may be sent over this PDU session. The time at which the PDU session is subsequently released by the USS via a revoke for Authentication may vary depending on the policy/implementation of the USS. While the PDU session is maintained, if there are the PDR and URR for that PDU session, Usage Report by this may be passed from UPF to SMF (Step 2a/2b). Then, when the UUAA revocation procedure is performed by the USS (Step 3), the Final Usage Report for the URR may be included in the N5 Session Release process during the Network Requested PDU Session Release procedure and sent to the SMF (Step 4).

Since the network resources used during the time when UAS services are not allowed are provided for the stability and location tracking of UAVs during the time when UAV services are not allowed, network operators need to monitor the network resource usage and understand the network resource usage statistics during the time when UAS services are not allowed in order to determine the charging policy for such services (e.g., charging differently or not charging for network resources or services provided during the time when UAS services are not allowed compared to charging for network resources or services provided during the time when UAS services are allowed) or to deploy/increase network equipment for such services.

However, currently, in the above situation, there is no behavior of AMF or SMF to maintain network resources, and even if they do, UPF can know the usage of the entire PDU session, but UPF cannot know the point at which UAV service is disallowed. Therefore, there is a problem that the network resource usage (usage of DL/UL data traffic of PDU session) from the point at which UAS service is disallowed until the PDU session is released is unknown. To solve this problem, additional behavior is required in addition to the existing behavior for subscriber information and the behavior of SMF.

In this specification, the case that a service is not allowed in the 3GPP may mean that the service is disallowed due to a change in the subscription data of the UAV within the 3GPP network, rather than due to a physical disconnection from the UAV. In this situation, the USS is permitting the service. Therefore, if UAS service is allowed to use in the 3GPP network, the UAS service may be provided continuously using network resources.

The AMF and SMF may receive notification from the UDM of changes in subscriber information. This specification proposes a method for measuring DL/UL traffic used for USS/C2 communications until a UUAA revocation request is received from the USS, even if the change in aerial subscription data causes the 3GPP to disallow UAS services while providing UAS services.

### <Disclosure of the present specification>

If the UAS-related service is not allowed, the usage report of the PDU Session may consist of a combination of one or more of the following behaviors/configurations/steps

The usage report for the PDU Session when the UAS-related service is not allowed may be triggered by the SMF when the API-based secondary authentication/authorization is successful and the Aerial Subscription data for the PDU Session/PDN connection for USS communication and/or C2 communication in normal use is changed to not allow aerial services on the 3GPP network. If the Aerial UE Subscription Info in the AM Subscription data managed by the AMF is changed such that the terminal does not allow UAS services, the subsequent behavior may be the same, with the SMF receiving a message from the AMF that the Aerial Subscription Data has been changed to not allow UAS services.

As described above, the PDU session/PDN connection for USS and C2 communications in this specification may be used commonly or separately. When used separately, each PDU session/PDN connection may be distinguished by a separate DNN/S-NSSAI (APN in the case of EPS). In this case, usage information is measured at the granularity level of each PDU session/PDN connection level. In the case of common use, USS communication traffic and C2 communication traffic may be distinguished as flows by PDR.

For the purposes of this specification, PDU sessions related to UAS services may be interpreted as PDU sessions for USS communications and/or PDU sessions for C2 communications.

User Equipment (UE), terminal, and Uncrewed Aerial Vehicle (UAV) are used interchangeably in this specification.

Re-authentication process of a UE may be interpreted as a re-authorization process, or a re-authentication and re-authorization process.

The term Aerial service and UAS service are used interchangeably in this specification.

This specification is focused on proposals. For UUAA related behavior and procedures, TS 23.256 may be referred. For UAS Service-related Aerial Subscription data and N4 Session behavior and procedures between UPF and SMF, TS 23.502 may be referred. For messages used in N4 Session procedures, TS 29.244 may be referred.

For the purposes of this specification, network resources may be interpreted as PDU session and user plane resources. Also, the release of a network resource may be interpreted as the release of a PDU session and the release of a user plane resource.

The following drawings are intended to illustrate specific embodiments of the present disclosure. The designations of specific devices or the designations of specific signals/messages/fields depicted in the drawings are for illustrative purposes only, and the technical features of the present disclosure are not limited to the specific designations used in the drawings.

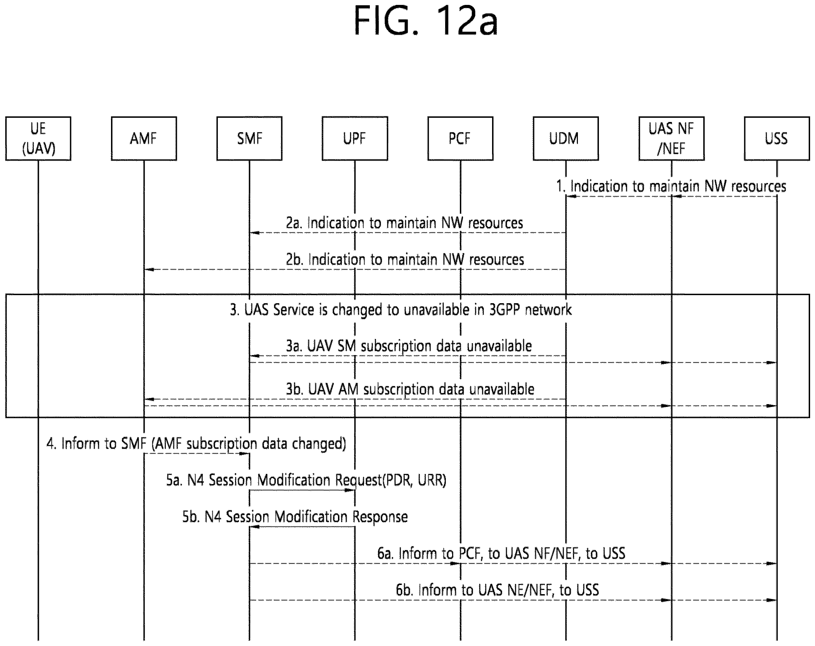

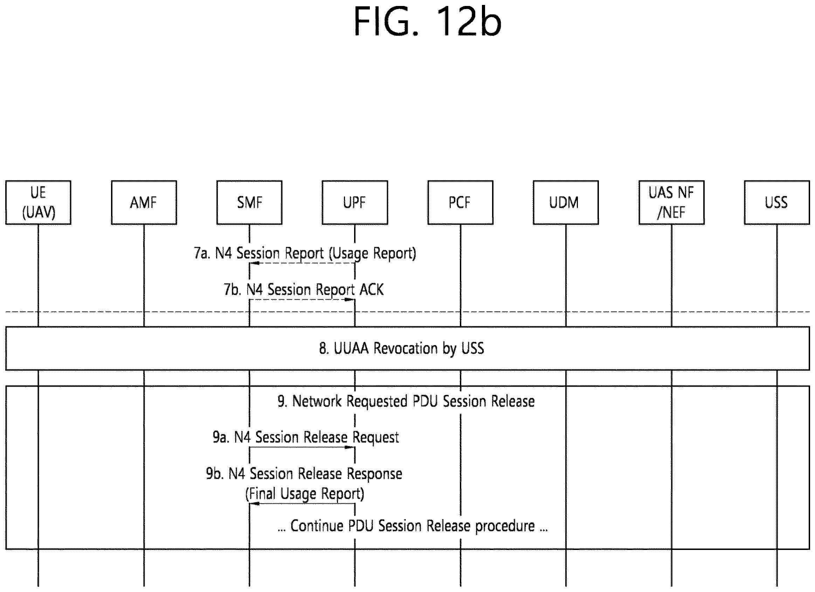

**FIG. 12a** **and** **FIG. 12b** **are illustrative drawings in accordance with the disclosure of the present specification.**

The processes of Steps 1,2a, 2b, 4, 5a, 5b, 6a, 6b may be added according to suggestion of the disclosure of the present disclosure. Steps 1, 2a, and 2b may be performed upon receiving an "indication from the USS as to whether network resources associated with the UAS service should be maintained if the UAS service is not permitted". Steps 5a and 5b may always be performed. Step 4 may additionally be performed if the service is not allowed due to a change in AM subscription data. Steps 6a and 6b may additionally be performed if requested by the USS or PCF.

### 1. Step 1-2

If the UAS service is not allowed, the SMF may obtain a usage report of the PDU sessions related to the UAS service.

The UAS NF/NEF may receive an 'indication about whether it is needed to maintain NW resources (PDU session/user plane resources) related to the UAS service if the UAS service is not allowed' from the USS and transmit it to the UDM to update the information related to the Subscription Data.

During normal UAS service provision, the Aerial Subscription data information managed by 3GPP may be changed to disallow UAS services. In these (or other) cases, the 3GPP network may need to disconnect from the UAV or block the transmission or reception of data in PDU sessions for UAS services. In such cases, where it is still necessary to provide services using 3GPP resources, the USS may provide indication information 'indication to maintain NW resources'.

The indication information may be included in the UUAA result/response message, or a new message may be defined and used for the indication information. If the indication information is included in the UUAA result/response message, it may be conveyed during the initial UUAA process as well as during the UUAA re-authentication process. The 'indication about whether it is needed to maintain NW resources (PDU session/user plane resources) related to the UAS service if the UAS service is not allowed' may be provided in different semantics for the same purpose. For example, it may be provided as 'indication about whether it is needed to release NW resources related to the UAS service if the UAS service is not allowed', "'indication about whether it is needed not to release NW resources related to the UAS service if the UAS service is not allowed", etc. This may be applied throughout this specification.

The UAS NF/NEF may receive the above indication information and transmit to the UDM. The UDM may receive the above indication information and indicate it in the Subscription Data associated with the aforementioned UAS Service (i.e., in conjunction with the "AerialUESubscriptionInfo" information in the AM Subscription data, in conjunction with the "DNN(s) subject to aerial services" information in the SMF Selection Subscription data, and/or for each DNN in each S-NSSAI in the SM Subscription data). The UAS NF/NEF may transmit, to the AMF (Step 2b) and/or the SMF (Step 2a), the subscription data information updated with the "indication".

Even if the above indication is not explicitly received from the USS, the subscription data may be set as if the indication is received. That is, UDM, SMF, and AMF may be preset, so that the following actions may be performed even if the above indication information is not received.

The 'indication to maintain NW resources'(='indication about whether it is needed to release NW resources related to the UAS service if the UAS service is not allowed') may be preset in the subscription data depending on the use of the UAV (e.g., photo or video shooting, cargo transportation, public safety, etc.). For example, in case of the UAV for public safety, it may be preset in the subscription data to behave as if it has received such an indication, even if it has not received such an indication from the USS. On the other hand, in case of the UAV for taking photos or videos, the subscription data may be set to indicate that it has not received the above indication. It can also be operated by receiving the above indication from the USS later.

### 2. step 3-4

In the 3GPP network, if the UDM has updated the SM subscription data due to a change in the Aerial subscription data that no longer allows UAS services, the UDM may transmit the SM subscription data to the SMF (step 3a).

Alternatively, if the UDM has updated the AM subscription data because the 3GPP network no longer allows UAS services due to a change in the Aerial subscription data, the UDM may transmit the AM subscription data to the AMF (step 3b). In this case, since the SMF may not be aware of this fact (change of AM subscription data), step 4 may be performed later.

If a change of the AM subscription data causes the UAS service to be disallowed, the AMF may send information about this to the SMF (Step 4).

If the AM Subscription data managed by the AMF has changed, the SMF may not be aware of the change in this information and therefore may not be able to initiate a usage report in that situation. Accordingly, if the AM Subscription data of the AMF is changed to disallow UAS Services, the AMF may send one or more of the following information to the SMF if the subscription data includes an "indication of whether network resources related to UAS Services should be maintained if UAS Services are disallowed" or if the subscription data is preset to behave as if the indication is received even if it is not. This information may be transmitted explicitly or implicitly. In addition, much of the information may be transmitted implicitly.
- Information indicating that an AM subscription no longer allows public service
- Information about the time the AM subscription no longer allows public service.
- Information that directs UAS service-related network resources not to be released or to be retained.
- Information to instruct UPF to report usage for UAS service-related PDU sessions.
- An indication of whether the UAS service-related network resources may be released if the UAS service-related network resources become unavailable in 3GPP, or information indicating that such an indication has not been provided by the USS
- An indication of whether the UAS service-related network resource/PDU session should be maintained if the UAS service-related network resource becomes unavailable in 3GPP, or information indicating that such an indication was not provided by the USS
- Monitoring time (later in step 5).

Existing messages (e.g., Nsmf_PDUSession_UpdateSMContext) may be extended and used by the AMF to transmit the above information to the SMF, or new messages may be defined and used. Alternatively, the AMF could operate a notification service to notify if the aerial subscription is changed to be unallowable, and the SMF could subscribe to this notification service when it creates a PDU session for the UE's UAS service. Thus, the AMF can notify the SMF when the AM subscription data changes. At this time, the AMF may also provide the aforementioned information to the SMF.

The SMF may decide to take the following steps based on the above information received from the AMF. If the SMF receives information about UAS-related subscription data changes via Notification, the SMF may determine that it needs to obtain usage reports of PDU sessions related to UAS services by verifying the information provided by the AMF.

### 3. step 5

If the 3GPP network becomes unable to allow UAS services, the SMF may send, to the UPF, a message (e.g., N4 Session Modification Request) instructing to report the usage of UAS service-related PDU sessions. (Step 5a, 5b)

When the SMF receives information about changes of UAS-related subscription data via Notification, it may be necessary to release (release of PDU sessions/release of user plane resources) or block the use of network resources related to UAS services.

The Notification may be received by the SMF from the UDM or AMF. For example, a notification about a change of SM Subscription data may be received from the UDM, and a notification about a change of AM Subscription data may be received by the AMF from the UDM and notified to the SMF.

If the subscription data has an "indication of whether UAS service related network resources should be maintained if UAS service is not allowed" or if it is set to behave as if the indication is set according to policy or subscription information even if the indication is not received, it does not receive such an indication but is set to behave as if the indication is set according to policy or subscriber information, the SMF may send, to the UPF, a message (e.g. N4 Session Modification Request) instructing the UPF to report usage for UAS service-related PDU sessions while maintaining resources related to PDU sessions and UAS service until the PDU session is terminated due to UUAA Revocation. This message may include a PDR and a URR to receive a usage report for UL/DL traffic used after a situation in which 3GPP does not allow service occurs. Packets for USS and C2 communications may be filtered via the PDR. And, the measurement method and reporting method for the filtered packets may be set through the URR included in the PDR.

If a common PDU session is used for USS and C2 communications, USS and C2 traffic may be separated into different flows and measured through the PDR. This maybe accomplished by using a Packet Filter Set.

If separate PDU sessions are used for USS and C2 communications, traffic usage for PDU sessions for USS and PDU sessions for C2 communications may be measured separately. In this case, the SMF may send, to the UPF, a message instructing to report usage for each PDU session. The UPF may be the same UPF, or it may be a different UPF for each PDU session.

The N4 Session Modification Request message, based on cases i-iv, is described later.
i) in case PDR is updated and URR is created (in case you already have a PDR that filters USS and C2 communications)
   - The N4 Session Modification Request may include an Update PDR and a Create URR IE.
   - Create URR: Creates a URR for UL/DL usage report and a URR ID may be assigned.
   - Update PDR: the created URR ID may be added to the list of URR IDs of PDRs that are filtering USS and C2 communication traffic.
ii) in case of renewing a URR (in case of already having PDRs that filter USS and C2 communications and a URR that measures USS and C2 communications traffic)
   - The N4 Session Modification Request may include an Update URR IE. by setting Monitoring Time in Update URR IE, it is enabled that usage report separated based on monitoring time may be generated. In this time, the Monitoring time may be set the time when it is recognized that the service is no longer permitted due to a subscription change. (Or, the time when you perform an N4 Session Modification may be set).
   - UPF may generate a separate usage report from that point by the monitoring time.
   - If the SMF receives a change of AM subscription data from the AMF, the SMF may set to the value if the SMF receives the Monitoring time from the AMF in step 4 above. Or, if the SMF does not rec the monitoring time from the AMF, it can be set based on the time when the information is received from the AMF in step 4.
iii) in case URR is renewed (in case of already having PDRs that filter USS and C2 communications and a URR that measures USS and C2 communications traffic)
   - The N4 Session Modification Request may include an Update URR IE.
   - a new IE instructing additional usage report may be created in Update URR IE. If a URR containing the new IE is transmitted to UPF, it is enabled that the UPF creates additional usage report from the time when the UPF receives the URR (when the service becomes disallowed due to a subscription change).
   - In this case (where the SMF receives additional usage reporting using a new IE that instructs to generate additional usage reporting for the same URR), the SMF may consider UPFs that support the new IE attribute when selecting UPFs.
iv) in case PDR and URR are created (in case of not having PDRs that filter USS and C2 communications and a URR that measures USS and C2 communications traffic)
   - An N4 Session Modification Request may include a Create PDR and a Create URR IE.
   - Create URR: a URR for UL/DL usage report may be created and a URR ID may be assigned.
   - Create PDR: a PDR for filtering USS and C2 communication traffic may be created. The created URR ID may be added to the URR ID List of the created PDR.

Even if there is a PDR in use that filters USS communication and C2 communication packets, a new PDR may be created if filter UAS service traffic in a different way (specific port, IP address, etc.) is wanted as needed.

It is always possible for the SMF to send a message to the UPF instructing to report usage for UAS service-related PDU sessions as described above. The SMF sending a message to the UPF instructing to report usage for UAS service-related PDU sessions as described above may be performed based on a variety of information (e.g., local configuration set in the SMF, operator policy, subscriber information related to the UE, requested by the USS, requested by the PCF, etc.). The local configuration set in the SMF may include the configuration for the DNN/S-NSSAI of the PDU session used for the UAS service.

### 4. step 6

The SMF may notify the PCF or UAS NF/NEF that the UAS service has been disallowed. The SMF may notify the PCF or UAS NF/NEF that it has instructed the UPF to report on the usage. (Step 6a, 6b)

The USS may subscribe to a notification service for the aforementioned facts. The UAS NF/NEF may subscribe to the SMF's or PCF's notification service of the aforementioned facts, and thereby receive notification of the aforementioned facts from the SMF or PCF. The UAS NF/NEF may transmit notifications of the aforementioned facts to the USS. If the UAS NF/NEF or USS subscribes to the PCF's notification service, the PCF may in turn subscribe to the SMF's notification service to receive notifications from the SMF.

If the SMF has instructed the UPF in step 5 to report additional usage through the creation/update of PDR and URR because the UAS service has become disallowed, the SMF may notify the PCF or UAS NF/NEF that subscribed to the SMF's notification service after the additional usage reporting instruction.

If the SMF has transmitted the notification to the PCF, the PCF may transmit the notification to the USS via the UAS NF/NEF.

If the SMF or PCF has transmitted the notification to the UAS NF/NEF, the UAS NF/NEF may transmit the notification to the USS.

Even if the USS does not request to subscribe to the notification service, the PCF or UAS NF/NEF may request to subscribe to the notification service from the SMF so that the PCF or UAS NF/NEF are notified of the above information.

If the PCF receives a notification from the SMF informing it of the aforementioned facts (that the UAS service has become disallowed and/or that the UPF has been instructed to report its use), the PCF may update additional policy before or after transmitting the notification to the USS via the UAS NF/NEF. For example, the PCF may update the policy to allow only limited C2 communication or only limited traffic for C2 and Tracking. Since the PCF may not know directly when a UAS service is disallowed, the PCF may be notified from the SMF to update the necessary policies. The necessary policies may be preset by the USS to apply to such situations. The PCF may transmit the updated policy to the SMF through the Npcf_SMPolicyControl_UpdateNotify request during the PCF initiated SM Policy Association Modification process.

### 5. step 7

The UPF may filter UL/DL traffic based on PDR and URR generated by SMF. The UPF may collect/measure the usage. (Step 7a, 7b)

The UPF may filter the UL/DL traffic used for USS/C2 communication according to the PDR/URR generated/updated based on the usage report instruction (N4 Session Modification Request in step 5) received from the SMF. The UPF may collect/measure the usage. The UPF may create additional usage reports for USS/C2 communications (in addition to the existing usage reports) by the new URR. The UPF may also transmit usage reports to the SMF periodically or based on data volume, based on the value of the Usage Report Trigger field. The SMF may store the cumulative value of the usage received from the UPF.

### 6. step 8

The USS may perform revocation for the UUAA.

### 7. step 9

Once the USS may perform revocation for the UUAA, the SMF may release the PDU session (Step 9).

The UUAA revoke operation may initiate release for the PDU session.

The SMF may send an N4 Session Release Request to the UPF (Step 9a). The UPF may include a usage report in an N4 Session Release Response and may transmit, to the SMF, the N4 Session Release Response in response to the N4 Session Release Request from the SMF.

The N4 Session Release Response may include a Final Usage Report for the URR. The N4 Session Release Response may also include a Final Usage Report for the USS and C2 communication traffic. If the URR is removed by the N4 session release, the Final Usage Report may include information about the traffic usage from the time the UPF sent the previous usage report to the SMF until the release. The UPF may send the SMF a Final Usage Report with the URR's Usage Report Trigger set to Termination Report (TERMR). The SMF may accumulate the usage reports received from the UPF. As a result, the SMF may obtain a usage report of the amount of network resources utilized (when 3GPP does not allow UAS service) from the time the UAS service is not allowed in 3GPP until the PDU session is released

The association between the SMF and the UPF node may be released for reasons such as network Operation Administration Maintenance (OAM). In this case, the UPF may support the Enhanced PFCP Association Release feature (EPFAR) to transmit usage reports remaining in the UPF to the SMF. In order for the SMF and the UPF to receive usage reports using this attribute, the SMF may consider whether the UPF supports the EPFAR attribute when selecting the UPF.

During the period of time from when the UAS service is no longer allowed in 3GPP until the PDU session is released, information about network resource usage may be known to the network operator. This may be utilized for billing policies and network equipment deployment/expansion by the network operator as usage monitoring and network usage statistics information for the UAS service during the time if network resource for the UAS service is provided for UAV stability even if UAS service is not allowed in 3GPP.

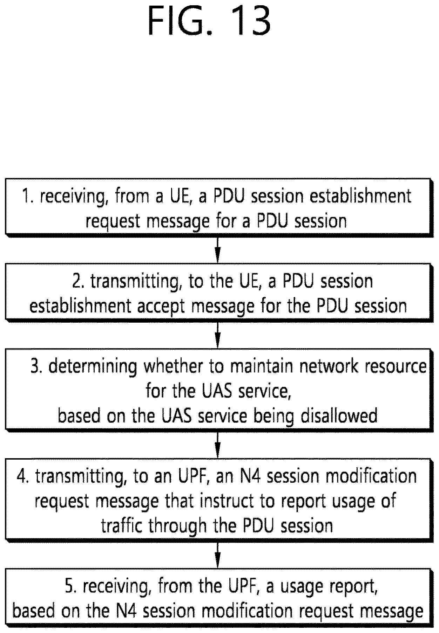

**FIG. 13** **shows the procedure of the SMF according to disclosure of the present specification.**
1. The SMF may receive, from a UE (User Equipment), a PDU (Protocol Data Unit) session establishment request message for a PDU session.
2. The SMF may transmit, to the UE, a PDU session establishment accept message for the PDU session.
   The PDU session may be for UAS (Uncrewed Aerial System) service.
3. The SMF may determine whether to maintain network resource for the UAS service, based on the UAS service being disallowed.
4. The SMF may transmit, to an UPF (User Plane Function), an N4 session modification request message that instruct to report usage of traffic through the PDU session.
5. The SMF may receive, from the UPF, a usage report, based on the N4 session modification request message.

The SMF may receive, from an UDM (Unified Data Management), an indication that instructs to maintain network resource for the UAS service even if the UAS service is disallowed.

The step of determining whether to maintain network resource for the UAS service may be performed based on the indication.

The SMF may receive, from an AMF (Access and Mobility management Function), indication that instructs to maintain network resource for the UAS service even if the UAS service is disallowed.

The step of determining whether to maintain network resource for the UAS service may be performed based on the indication.

The N4 session modification request message may include information on PDR (Packet Detection Rule) and URR (Usage Reporting Rule).

The N4 session modification request message may include information on monitoring point.

The usage report may include information on usage of traffic of the UE from the monitoring point.

based on revocation of an UUAA (UAV USS authentication and authorization procedure),

The SMF may perform release of the PDU session.

The usage report may include information on usage of traffic of the UE from the time the UAS service is disallowed to the time the PDU session is released.

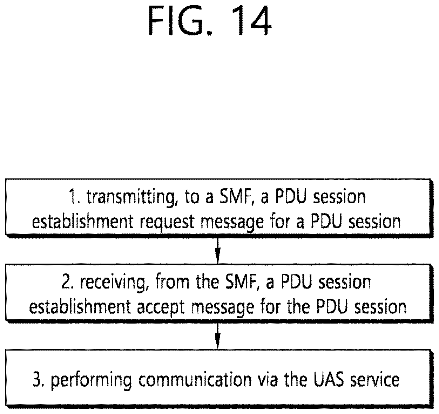

**FIG. 14** **shows the procedure of the UE according to disclosure of the present specification.**
1. The UE may transmitt, to a SMF (Session Management Function), a PDU (Protocol Data Unit) session establishment request message for a PDU session.
   The PDU session may be for UAS (Uncrewed Aerial System) service.
2. The UE may receive, from the SMF, a PDU session establishment accept message for the PDU session.
3. The UE may perform communication via the UAS service.

Even though the UAS service is disallowed, traffic may still be sent and received over the PDU session until the PDU session is released.

Hereinafter, an apparatus for performing communication according to some embodiments of the present specification will be described.

For example, a SMF may include a processor, a transceiver, and a memory.

For example, a processor may be configured to be operably coupled with a memory and a processor.

The processor may perform: receiving, from a UE (User Equipment), a PDU (Protocol Data Unit) session establishment request message for a PDU session; transmitting, to the UE, a PDU session establishment accept message for the PDU session; wherein the PDU session is for UAS (Uncrewed Aerial System) service, determining whether to maintain network resource for the UAS service, based on the UAS service being disallowed; transmitting, to an UPF (User Plane Function), an N4 session modification request message that instruct to report usage of traffic through the PDU session; receiving, from the UPF, a usage report, based on the N4 session modification request message.

Hereinafter, a processor for providing communication according to some embodiments of the present specification will be described.

The processor is configured to: transmitting, to a SMF (Session Management Function), a PDU (Protocol Data Unit) session establishment request message for a PDU session; wherein the PDU session is for UAS (Uncrewed Aerial System) service, receiving, from the SMF, a PDU session establishment accept message for the PDU session; performing communication via the UAS service.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: transmitting, to a SMF (Session Management Function), a PDU (Protocol Data Unit) session establishment request message for a PDU session; wherein the PDU session is for UAS (Uncrewed Aerial System) service, receiving, from the SMF, a PDU session establishment accept message for the PDU session; performing communication via the UAS service.

The present specification may have various effects.

For example, information about network resource usage during the time from when 3GPP disallows UAS services until the PDU session is released may be provided.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a SMF (Session Management Function), comprising:
receiving, from a UE (User Equipment), a PDU (Protocol Data Unit) session establishment request message for a PDU session;
transmitting, to the UE, a PDU session establishment accept message for the PDU session;
wherein the PDU session is for UAS (Uncrewed Aerial System) service,
determining whether to maintain network resource for the UAS service, based on the UAS service being disallowed;
transmitting, to an UPF (User Plane Function), an N4 session modification request message that instruct to report usage of traffic through the PDU session;
receiving, from the UPF, a usage report, based on the N4 session modification request message.

2. The method of claim 1, further comprising:
receiving, from an UDM (Unified Data Management), an indication that instructs to maintain network resource for the UAS service even if the UAS service is disallowed,
wherein the step of determining whether to maintain network resource for the UAS service is performed based on the indication.

3. The method of claim 1, further comprising:
receiving, from an AMF (Access and Mobility management Function), indication that instructs to maintain network resource for the UAS service even if the UAS service is disallowed,
wherein the step of determining whether to maintain network resource for the UAS service is performed based on the indication.

4. The method of claim 1,
wherein the N4 session modification request message includes information on PDR (Packet Detection Rule) and URR (Usage Reporting Rule).

5. The method of claim 1,
wherein the N4 session modification request message includes information on monitoring point,
wherein the usage report includes information on usage of traffic of the UE from the monitoring point.

6. The method of claim 1, further comprising:
performing release of the PDU session, based on revocation of an UUAA (UAV USS authentication and authorization procedure).

7. The method of claim 6,
wherein the usage report includes information on usage of traffic of the UE from the time the UAS service is disallowed to the time the PDU session is released.

8. A SMF (Session Management Function), to perform communication, comprising:
a transceiver; and
a processor,
wherein the processor performs operation comprising:
receiving, from a UE (User Equipment), a PDU (Protocol Data Unit) session establishment request message for a PDU session;
transmitting, to the UE, a PDU session establishment accept message for the PDU session;
wherein the PDU session is for UAS (Uncrewed Aerial System) service,
determining whether to maintain network resource for the UAS service, based on the UAS service being disallowed;
transmitting, to an UPF (User Plane Function), an N4 session modification request message that instruct to report usage of traffic through the PDU session;
receiving, from the UPF, a usage report, based on the N4 session modification request message.

9. A method for performing communication, performed by a UE (User Equipment), comprising:
transmitting, to a SMF (Session Management Function), a PDU (Protocol Data Unit) session establishment request message for a PDU session;
wherein the PDU session is for UAS (Uncrewed Aerial System) service,
receiving, from the SMF, a PDU session establishment accept message for the PDU session;
performing communication via the UAS service.

10. A UE (User Equipment), to perform communication, comprising:
a transceiver; and
a processor,
wherein the processor performs operation comprising:
transmitting, to a SMF (Session Management Function), a PDU (Protocol Data Unit) session establishment request message for a PDU session;
wherein the PDU session is for UAS (Uncrewed Aerial System) service, receiving, from the SMF, a PDU session establishment accept message for the PDU session;
performing communication via the UAS service.

11. An apparatus in mobile communication, comprising:
at least one processor; and
at least one memory storing instructions and operably electrically connectable with the at least one processor, based on the instructions being operated by the at least one processor, performed operation comprising:
transmitting, to a SMF (Session Management Function), a PDU (Protocol Data Unit) session establishment request message for a PDU session;
wherein the PDU session is for UAS (Uncrewed Aerial System) service, receiving, from the SMF, a PDU session establishment accept message for the PDU session;
performing communication via the UAS service.

12. A non-volatile computer readable storage medium having recorded instructions,
wherein the instructions, based on being executed by one or more processors, cause the one or more processors to:
transmitting, to a SMF (Session Management Function), a PDU (Protocol Data Unit) session establishment request message for a PDU session;
wherein the PDU session is for UAS (Uncrewed Aerial System) service, receiving, from the SMF, a PDU session establishment accept message for the PDU session;
performing communication via the UAS service.
